Europäisches Patentamt

European Patent Office

Office européen des brevets

(11) Publication number: **0 204 433 B1**

## EUROPEAN PATENT SPECIFICATION

(45) Date of publication of patent specification: **05.02.92**   (51) Int. Cl.⁵: **B60T  1/06**, F16D 65/847, F16D 65/12

(21) Application number: **86303427.8**

(22) Date of filing: **06.05.86**

(54) Brake by-product deflection in wheel and disc brake assembly.

(30) Priority: **06.05.85 US 730855**

(43) Date of publication of application:
**10.12.86 Bulletin  86/50**

(45) Publication of the grant of the patent:
**05.02.92 Bulletin  92/06**

(84) Designated Contracting States:
**DE FR GB SE**

(56) References cited:
| | |
|---|---|
| CA-A- 1 141 801 | DE-B- 1 069 478 |
| DE-B- 1 113 149 | FR-A- 740 859 |
| FR-A- 1 011 437 | FR-A- 2 030 718 |
| FR-A- 2 132 935 | GB-A- 677 243 |
| GB-A- 769 170 | GB-A- 990 445 |
| GB-A- 1 091 693 | US-A- 2 237 164 |
| US-A- 2 599 707 | US-A- 2 851 131 |
| US-A- 2 940 555 | US-A- 3 028 936 |
| US-A- 4 005 768 | US-A- 4 484 667 |

(73) Proprietor: **KLEEN WHEELS CORPORATION**
**5000 Oaks Road, Suite H**
**Fort Lauderdale, Florida 33314(US)**

(72) Inventor: **Bottieri, Joseph B., Jr.**
**2145 N.W. 2nd Avenue Miami**
**Florida 33127(US)**

(74) Representative: **Jones, Ian et al**
**POLLAK MERCER & TENCH High Holborn**
**House 52-54 High Holborn**
**London WC1V 6RY(GB)**

Rank Xerox (UK) Business Services

## Description

The invention relates to vehicle wheels provided with disc brakes and more particularly to an insert plate for reception in the structure of such a vehicle wheel.

One of the problems with disc brakes on cars is that during braking a substantial amount of by-product is given off by the brakes and ends up on the axially outboard side of the wheels, leaving a coating which detracts from the car's appearance.

With the object of preventing dust produced by the brake from being deposited on a visible portion of the vehicle wheel, US Patent 4 484 667 to Bottieri provides an annular insert plate for reception in a vehicle wheel structure comprising a spider with an annular tire support ring, and a brake rotor of a disc brake secured to the spider by studs, the insert plate having an inner portion received between the spider and the brake rotor, the inner portion having openings to accommodate the studs, an intermediate portion spaced from the spider and the brake rotor, and an outer portion engaged with the wheel at the region of the tire support ring.

In accordance with the present invention, there is provided such an annular insert plate characterised in that it has four or more slots cut and stamped into the intermediate portion thereof so as to function as a deflector plate, the slots forming scoops projected outwardly towards the spider but spaced therefrom and facing in a direction for causing air to flow inwardly through the spider and through the space between the spider and the deflector plate onto the disc brake to blow brake by-product away from the wheel.

US Patent 2 851 131 to Hibbard discloses a motor vehicle wheel body and circular cover assembly with ventilating holes in the cover. The holes have matching scoops and louvers to propel air against a brake structure for cooling purposes. The cover is essentially a modified exterior hubcap. There is no suggestion that the cover holes be arranged so as to keep the vehicle wheel clean.

In an insert plate according to the invention, the slots are preferably cut and stamped from the material of the deflector plate to have a maximum depth of about 0.64 cm. (1/4 inch).

Circumferentially spaced splits can be provided to extend inward from the peripheral edge of the plate to provide flexible and resilient fingers in succession along the periphery of the plate.

The openings can be so located as to receive therethrough four wheel studs, five wheel studs, or four wheel studs and two guide pins projecting axially outward from the brake rotor. Preferably the openings comprise five arcuate openings located at 72 dg. intervals angularly and two additional arcuate openings respectively located diametrically opposite two of the five openings.

The present invention will then be understood to provide an insert plate improved so as to prevent by-product produced by the brake from being deposited on a visible portion of the wheel by blowing the by-product away from the wheel.

The invention is further described below, by way of example, with reference to the accompanying drawings, wherein like reference signs designate corresponding parts in the several views, and wherein:

Figure 1 is a perspective view of an insert or deflector plate in accordance with the present invention;

Figure 2 is an outer end view of a wheel and disc brake assembly incorporating the present insert or deflector plate;

Figure 3 is a longitudinal section taken through this assembly taken along the line 3--3 in Figure 2;

Figure 4 is a longitudinal section taken through the insert or deflector plate taken along line 4--4 in Figure 2 to show a close up of an air slot;

Figure 5 is a perspective view of a second embodiment of the invention used in conjunction with the universal type mounting dust shield of US Patent 4 484 667; and

Figure 6 is a fragmentary longitudinal section showing a modified arrangement of the wheel, disc brake and deflector plate assembly of this invention.

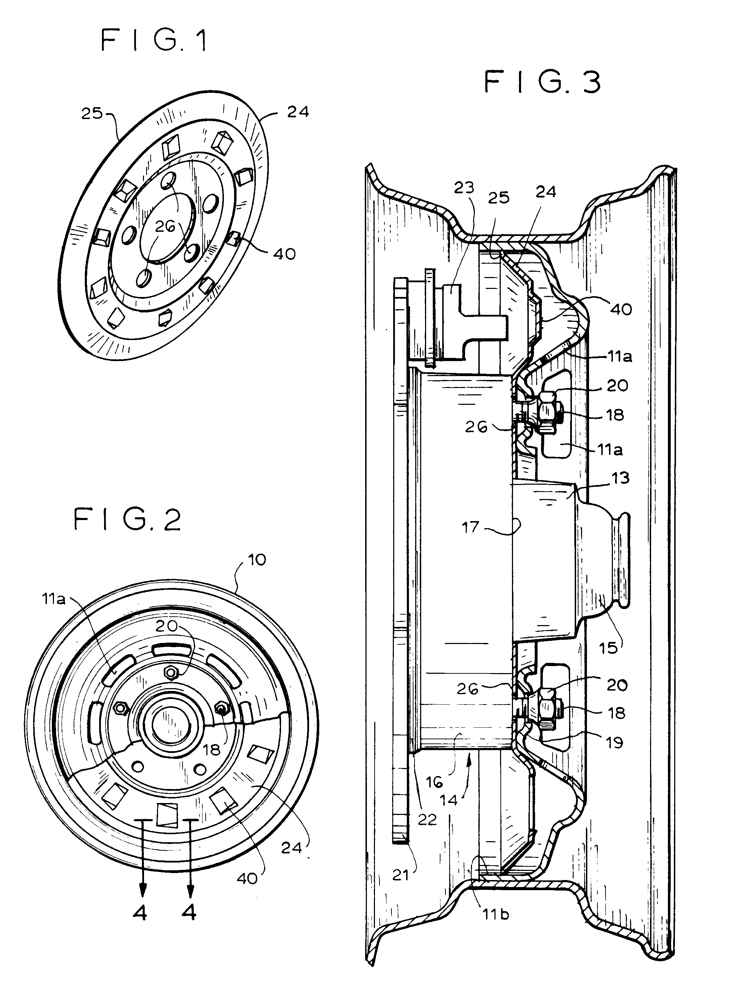

Referring first to Figure 3, the present assembly includes a car wheel and a disc brake of conventional design. The right-hand side in Figure 3 is the axially outboard, visible, side of the wheel. The wheel has an annular rim 10 which carries in inflatable tire (not shown) and a spider 11 rigidly attached to the inside of the rim and extending transversely inward from it in a generally radial direction. The wheel spider 11 also is formed with a plurality of circumferentially spaced, arcuate openings 11a for design and strength purposes.

At the axially outboard side of the wheel spider 11, as shown in Figure 3, the brake rotor carries a cap 15 which covers the end of the stub shaft (not shown) of the steering knuckle on which the brake rotor is rotatably mounted by anti-friction bearings. At the axially inboard side of the wheel spider 11 as shown in Figure 3 the brake rotor 14 presents a cylindrical side wall 16 of substantially larger diameter than the central opening 12 in the spider 11 of the wheel. This cylindrical side wall 16 is joined integrally to the hub 13 of the brake rotor by a flat, annular, transverse wall 17 extending radially between them.

A plurality of circumferentially spaced, screw-threaded wheel studs 18 extend axially outward from the transverse wall 17 of the brake rotor. These studs pass loosely through corresponding openings 19 in the wheel spider 11. Nuts 20 are threaded onto the wheel studs 18 to clamp the brake rotor 14 to the wheel.

A brake disc 21 is affixed to a slightly enlarged segment 22 of the brake rotor 14 at the axially inboard end of its cylindrical side wall 16. A disc brake caliper 23 carries frictional wear pads for engagement with the brake disc 21 in a known manner. The brake caliper is suitably mounted on the vehicle so as to remain stationary while the wheel 10 and 11, the brake rotor 14 and brake disc 21 rotate in unison.

In accordance with the present invention, an annular insert or deflector plate 24 as shown in Figure 1 is clamped between the wheel spider 11 and the transverse wall 17 of the brake rotor. Slots 40 are shown cut and stamped into the deflector plate surface forming air scoops which force cooling air onto the brakes when the vehicle is moving forward. The air also blows brake by-product away from the wheel. The plate 24 has a circular outer periphery 25 which, as shown in Figure 3, engages the inside of the cylindrical outer periphery 11b of the wheel spider 11 where the latter is joined to the wheel rim 10. The plate 24 is formed with a plurality of openings 26 which register with the openings 19 in the wheel spider 11 for receiving the wheel studs 18 on the brake rotor. Also, the plate 24 has a circular central opening 27 which receives the hub 13 of the brake rotor.

As shown in Figure 3, the plate 24 extends completely across the axially inboard face of the wheel spider 11 where the latter would otherwise be exposed to by-product produced by the disc brake when it is applied. The plate 24 prevents such by-product from escaping through the openings 11a in the wheel spider and lodging on the wheel at the axially outboard side of the wheel spider.

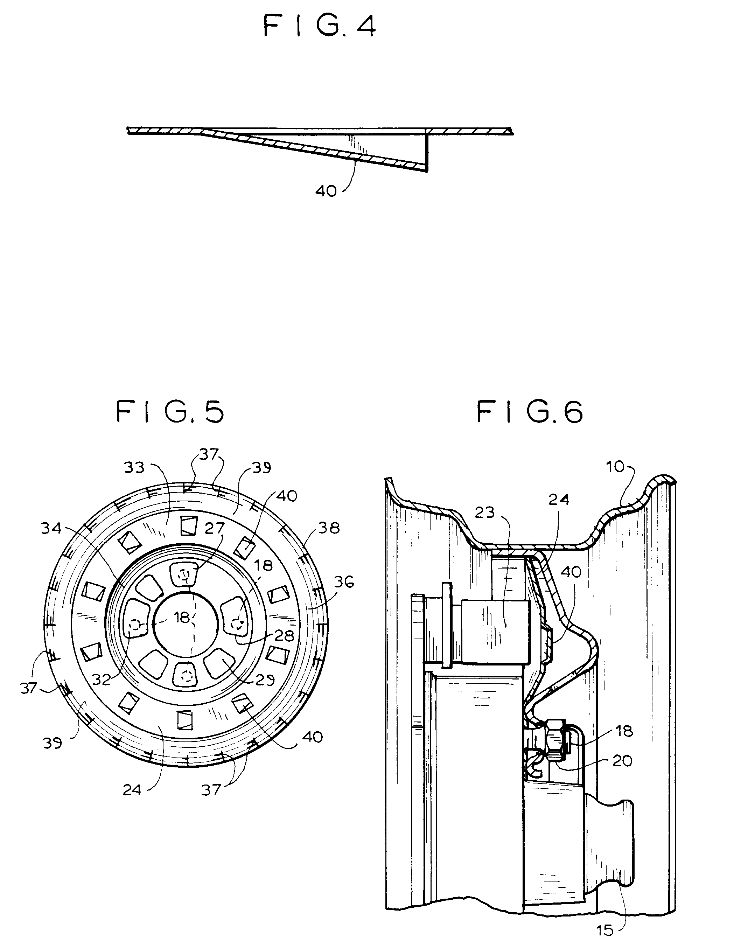

Figure 4 depicts a close up of an air slot provided in the plate 24 in accordance with the invention. Four or more of the slots 40 of approximately 0.64 cm. (1/4 inch) maximum depth are cut and stamped into the plate 24 to form scoops. The direction of the opening is such that the raised portion of the scoop faces outboard in the direction of forward travel of the vehicle.

In the second embodiment of the invention shown in Figure 5, the outer segment 36 of the deflector plate is formed with slits 37 extending inward from its circular outer edge 38 to provide flexible and resilient arcuate fingers 39 which facilitate the insertion of the deflector plate 25 into wheel whose dimensions may vary somewhat from one wheel to another.

Another important feature of this second embodiment is that the seven openings 27-33 in the deflector plate have respective arcuate extents and are so located as to enable the present deflector plate to be mounted on several types of passenger car wheels. For example, as shown in Figure 5, the wheel may have four wheel studs 18 arranged circularly at $90°$ intervals and passing through the openings 27,28,30 and 32 in the deflector plate. Another type of car wheel has two guide pins in addition to the four wheel studs, and these guide pins would be received in the deflector plate openings 29 and 33. Figure 5 shows how the deflector plate would be mounted on still another type of car wheel which has five wheel studs arranged circularly at $72°$ intervals and passing through the deflector plate openings 27,28,29,31 and 32.

From Figure 5 it will be evident that openings 28 and 32 are equally spaced arcuately on opposite sides of openings 27 and each is long enough arcuately that it extends to less than $72°$ from opening 27 and more than $90°$ from opening 27. Opening 29 is within less than $72°$ of openings 28 on the opposite side of opening 28 from opening 27, and this is also true of opening 31 in relation to opening 32. Opening 30 is diametrically opposite opening 27. Opening 33 is diametrically opposite opening 29.

## Claims

1. An annular insert plate (24) for reception in a vehicle wheel structure comprising a spider (11) with an annular tire support ring (10), and a brake rotor (14) of a disc brake secured to the spider by studs (18), the insert plate having an inner portion received between the spider and the brake rotor, the inner portion having openings (26;27-33) to accommodate the studs (18), an intermediate portion spaced from the spider (11) and the brake rotor, and an outer portion engaged with the wheel at the region of the tire support ring (10), characterised in that the insert plate (24) has four or more slots (40) cut and stamped into the intermediate portion thereof so as to function as a deflector plate (24), the slots forming scoops projected outwardly towards the spider (11) but spaced therefrom and facing in a direction for causing air to flow inwardly through the spider and through the space between the spider and the deflector plate onto the disc brake to blow brake by-product away from the wheel.

2. An insert plate as claimed in claim 1 wherein the slots (40) have a maximum depth of about 0.64 cm. (1/4 inch).

3. An insert plate as claimed in claim 1 or 2 wherein the slots (40) are cut and stamped from the material of the deflector plate.

4. An insert plate as claimed in claim 1, 2 or 3 wherein circumferentially spaced splits extend inward from the peripheral edge of the plate to provide flexible and resilient fingers in succession along the periphery of the plate.

5. An insert plate as claimed in any preceding claim wherein the openings (27-33) are so located as to receive therethrough (A) four wheel studs or (B) five wheel studs or (C) four wheel studs and two guide pins projecting axially outward from the brake rotor.

6. An insert plate as claimed in claim 5 wherein the openings (27-33) comprise five arcuate openings located at 72 dg. intervals angularly and two additional arcuate openings respectively located diametrically opposite two of the five openings.

**Revendications**

1. Plaque d'insert annulaire (24) pour logement dans une structure de roue de véhicule comprenant une armature centrale (11), avec une jante annulaire (10) portant le pneumatique, et un rotor de frein (14) d'un frein à disque fixé à l'armature par des goujons (18), la plaque d'insert comportant une partie intérieure reçue entre l'armature et le rotor de frein, la partie intérieure présentant des trous (26;27-33) pour le passage des goujons (18), une partie intermédiaire espacée de l'armature (11) et du rotor de frein, et une partie extérieure en contact avec la roue dans la région de la jante support de pneumatique (10), caractérisée en ce que la plaque d'insert (24) comporte quatre entailles (40) ou plus, découpées et estampées dans sa partie intermédiaire de façon à fonctionner comme une plaque déflectrice (24), les entailles engendrant des cuillères qui font saillie vers l'extérieur, vers l'armature (11) mais à une certaine distance de celle-ci, et qui sont tournées dans une direction qui oblige l'air à circuler vers l'intérieur, à travers l'armature et à travers l'espace défini entre l'armature et la plaque déflectrice, puis sur le frein à disque, afin de souffler les produits d'usure du frein et de les chasser de la roue.

2. Plaque d'insert suivant la revendication 1, dans laquelle les entailles (40) ont une profondeur maximale de 0,64 cm environ.

3. Plaque d'insert suivant la revendication 1 ou 2, dans laquelle les entailles (40) sont découpées et estampées à partir de la matière de la plaque déflectrice.

4. Plaque d'insert suivant la revendication 1, 2 ou 3, dans laquelle des fentes circonférentiellement espacées s'étendent vers l'intérieur à partir du bord périphérique de la plaque, pour créer des doigts flexibles et élastiques en succession le long de la périphérie de la plaque.

5. Plaque d'insert suivant l'une quelconque des revendications précédentes, dans laquelle les trous (27-33) sont situés de façon à permettre le passage de (A) quatre goujons de roue ou (B) cinq goujons de roue ou (C) quatre goujons de roue et deux tiges de guidage faisant axialement saillie vers l'extérieur à partir du rotor de frein.

6. Plaque d'insert suivant la revendication 5, dans laquelle les trous (27-33) comprennent cinq ouvertures courbes situées angulairement à des intervalles de 72 degrés et deux ouvertures courbes supplémentaires respectivement diamètralement opposées à deux des cinq ouvertures.

**Patentansprüche**

1. Ringförmige Einlegeplatte (24) zur Aufnahme im Aufbau eines Fahrzeugrades mit einer Felge (11) mit einem ringförmigen Reifenhaltering (10) und einem Bremsrotor (14) einer Scheibenbremse, der an der Felge durch Bolzen (18) befestigt ist, wobei die Einlegeplatte einen inneren Teil, der zwischen der Felge und dem Bremsrotor aufgenommen ist, welcher innere Teil Öffnungen (26; 27 -33) aufweist, um die Bolzen (18) aufzunehmen, einen mittleren Teil im Abstand von der Felge (11) und dem Bremsrotor und einen äußeren Teil aufweist, der mit dem Rad im Bereich des Reifenhalteringes (10) in Eingriff steht, dadurch gekennzeichnet, daß die Einlegeplatte (24) vier oder mehr Schlitze (40) aufweist, die in den mittleren Teil geschnitten und gestanzt sind, so daß diese als Ablenkplatte (24) wirkt, wobei die Schlitze Schaufeln bilden, die nach außen zur Felge (11) vorstehen, jedoch einen Abstand davon haben und in eine derartige Richtung gewandt sind, daß Luft nach innen durch die Felge und durch den Zwischenraum zwischen der Felge und der Ablenkplatte auf die Scheibenbremse strömen gelassen wird, damit Bremsverschleißprodukte vom Rad weggeblasen werden.

2. Einlegeplatte nach Anspruch 1, bei der die Schlitze (40) eine maximale Tiefe von etwa 0,64 cm (1/4 inch) haben.

3. Einlegeplatte nach Anspruch 1 oder 2, bei der die Schlitze (40) aus dem Material der Ablenkplatte geschnitten und gestanzt sind.

4. Einlegeplatte nach Anspruch 1, 2 oder 3, bei der in Umfangsrichtung beabstandete Einschnitte von der Umfangskante der Platte nach innen verlaufen, so daß biegsame und elastische Finger der Reihe nach längs des Umfanges der Platte vorgesehen sind.

5. Einlegeplatte nach einem der vorhergehenden Ansprüche, bei der die Öffnungen (27 - 33) so angeordnet sind, daß sie hindurchgehend A) vier Radbolzen oder B) fünf Radbolzen oder C) vier Radbolzen und zwei Führungsstifte aufnehmen, die axial vom Bremsrotor nach außen vorstehen.

6. Einlegeplatte nach Anspruch 5, bei der die Öffnungen (27 - 33) fünf bogenförmige Öffnungen, die in Winkelintervallen von 72° angeordnet sind, und zwei zusätzliche bogenförmige Öffnungen umfassen, die jeweils diametral zwei der fünf Öffnungen gegenüber angeordnet sind.

EP 0 204 433 B1

FIG. 1

FIG. 3

FIG. 2

# F I G. 4

# F I G. 5

# F I G. 6